# EUROPEAN PATENT SPECIFICATION

(11) **EP 1 674 347 B1**
(45) Date of publication and mention of the grant of the patent: **28.05.2008**
(21) Application number: 05025814.4
(22) Date of filing: 25.11.2005
(51) Int. Cl.: B60R 21/01, G06K 9/00

(54) **Detection system, occupant protection device, vehicle, and detection method**
Erkennungssystem, Insassenschutzvorrichtung, Fahrzeug und Erkennungsverfahren
Système de détection, dispositif de protection pour un passager, véhicule, et méthode de détection

(30) Priority: 24.12.2004 JP 2004373957
(43) Date of publication of application: 28.06.2006
(73) Proprietor: TAKATA CORPORATION, Minato-ku, Tokyo 106-8510 (JP)
(72) Inventor: Aoki, Hiroshi, Tokyo 106-8510 (JP); Hakomori, Yuu, Tokyo 106-8510 (JP)
(74) Representative: Banzer, Hans-Jörg

(56) References cited:
- WO-A-01/64468
- WO-A-98/48372
- WO-A-20/04081850
- US-A1- 2002 149 184
- US-A1- 2003 133 595
- US-A1- 2004 040 772

## Description

The present invention relates to a technology for developing a detection system to be installed in a vehicle.

### Background of the Invention

Conventionally, an occupant restraint device for restraining a vehicle occupant by an air bag or the like in the event of vehicle collision is known. For example, disclosed in Japanese Patent Unexamined Publication No. 2002-264747 is a structure in which a camera or the like is used as an occupant's state estimating means for estimating the state of an occupant and then an occupant restraint means such as an airbag is controlled based on the state of the occupant estimated by the occupant's state estimating means.

US 2004/0040772 A1 discloses a method and a device for detecting an object in a vehicle in particular for an occupant protection system. According to this document, a camera is used which covers a specified image area of the interior of a vehicle, whereby from the image area a specified section is selected which contains the edge of an element, preferably of a vehicle seat facing the camera. This specified section is limited by a boundary plane and a separating plane and is divided into volume pixel elements, and it is selected such that at least a part of the section contains one element of the vehicle that is not obscured by an object. The position of the element is determined from the image information obtained from the specified section, so that a computing effort required for imaging processing can be reduced by the limitation to one section of the image area.

### Problems to be solved by the Invention

In an occupant protection device of the aforementioned type for protecting an occupant in the event of a vehicle collision, a technology for obtaining information about an object seated in a vehicle seat, for example, the posture and/or the size of a vehicle occupant, by using cameras with improved accuracy is highly demanded. Accordingly, a technique using a plurality of cameras has been conventionally proposed. The plurality of cameras are arranged to surround a vehicle seat, in which the object as a photographic subject is seated, so as to take images without blind spots, whereby information about the profile of the object seated can be obtained precisely. Though this structure using a plurality of cameras enables the precise acquisition of information about the profile of the object seated in the vehicle seat, the structure has a problem of increasing the cost.

The present invention has been made in view of the above problem and it is an object of the present invention to provide an effective technology for easily and precisely detecting information about an object seated in a vehicle seat.

### Means to solve the Problems

According to the invention, this object is achieved by a detection system as defined in claim 1 and a detection method as defined in claim 9. The dependent claims define preferred and advantageous embodiments of the invention.

For achieving the object, the present invention is configured. Though the present invention is typically adopted to a detection system for detecting information about an object seated in a vehicle seat in an automobile, the present invention can be also adopted to a technology for a detection system for detecting information about an object seated in a vehicle seat of a vehicle other than the automobile.

### (First invention)

A detection system according to a first invention is a detection system for detecting information about an object seated in a vehicle seat and comprises at least a three-dimensional surface profile detecting means, a digitizing means, a seat-information detecting means, a reference plane setting means, and a deriving means. The "object seated" used here may be a vehicle occupant seated directly or indirectly in the vehicle seat and may widely include any object (for example, a child seat) placed on the vehicle seat. The "information about the object seated" may include the configuration (volume and body size) and the posture of the object.

The three-dimensional surface profile detecting means of the present invention is a means having a function of detecting a three-dimensional surface profile of the object seated relating to a single view point. The three-dimensional surface profile relating to the single view point of the object seated can be detected by photographing the object by a single camera installed in a vehicle cabin.

The digitizing means of the present invention is a means having a function of digitizing the three-dimensional surface profile detected by the three-dimensional surface profile detecting means. By the digitizing means, an image of the object photographed by the single camera is digitized into digitized coordinates.

The seat-information detecting means of the present invention is a means having a function of detecting information about the seat condition of the vehicle seat. The "information about the seat condition of the vehicle seat" may widely include the position and posture of the vehicle seat and may be the seat cushion height, the seat back inclination, and the seat slide position of the vehicle seat.

The reference plane setting means of the present invention is a means having a function of setting a reference plane which defines the profile of the far side, i.e. a side invisible from the single view point, among the respective parts of the three-dimensional surface profile based on said information about the seat condition of said vehicle seat detected by said seat-information detecting means.

The deriving means of the present invention is a means having a function of correcting the digitized coordinates, which were digitized by the digitizing means, by the reference plane, which was set by the reference plane setting means, and deriving the information about the object seated from the digitized coordinates thus corrected.

The far side of the three-dimensional surface profile is portions which can not directly detected from the single view point. If the profile of the far side can be estimated with high accuracy by the setting of the reference plane, the information about the object seated can be easily detected with high accuracy. For this, the present invention employs a structure for setting the reference plane based on the information about the seat condition of the vehicle seat. It is based on the idea that the vehicle seat is a part adjacent to the profile of the far side among vehicle parts so that the use of the information about the seat condition of the vehicle seat to set the reference planes is effective for estimating the profile of the far side with high accuracy.

According to the detection system having the aforementioned structure, the three-dimensional surface profile of the object seated is detected from the single view point and the technology for setting the reference plane which defines the profile of the far side, i.e. the side invisible from the single view point, is devised using the information about the seat condition of the vehicle seat, thereby enabling the easy and precise detection of the information about the object seated in the vehicle seat. This also enables reduction in cost of the device.

The information about the object seated detected by the detection system of the present invention can be preferably used for control of occupant protection means, for example, an airbag and a seat belt, for protecting the vehicle occupant. Since all that's required by the present invention is the installation of a single camera which is focused on an object on the vehicle seat with regard to the "single view point", the present invention does not avoid the installation of another camera or another view point for another purpose.

### (Second invention)

According to a second invention, in an embodiment of the detection system, the reference plane setting means sets at least one of three reference planes as the reference plane of the present invention based on said information about the seat condition of said vehicle seat. The three reference planes are a first reference plane along a side surface of a seat cushion of the vehicle seat, a second reference plane along a surface of a seat back of the vehicle seat, and a third reference plane along a surface of the seat cushion of the vehicle seat.

The first reference plane is set for the reason that the object seated is less likely to project outside from the sides of the vehicle seat. The second reference plane is set for the reason that the object seated is less likely to project backward from the seat back of the vehicle seat. The third reference plane is set for the reason that the object seated is less likely to project downward from the seat cushion of the vehicle seat. Therefore, the structure mentioned above enables precise setting of the reference planes.

### (Third invention)

According to a third invention a further embodiment of the detection system has the same structure mentioned before and further comprises a body-part-information detecting means for detecting information about body parts of a vehicle occupant as the object seated, including the positions and width of the head, the neck, the shoulder, the lumbar, and the back of the vehicle occupant. The reference plane setting means corrects the reference plane according to the information about the body parts detected by the body-part-information detecting means. Since the information about the occupant's body parts detected by the body-part-information detecting means is information directly relating to the position and posture of the vehicle occupant, the setting accuracy of the reference plane can be increased by reflecting the information about the occupant's body parts in setting the reference plane.

### (Fourth invention)

According to a fourth invention, in a still further embodiment of the detection system, the reference plane setting means sets the reference plane which is curved along the three-dimensional surface profile of the object seated. Such setting of the reference plane is grounded in the ideas that curved reference plane, not flat plane, enables further precise estimation because the three-dimensional surface profile of the vehicle occupant is normally curved. The structure mentioned above can increase the setting accuracy of the reference plane.

### (Fifth invention)

An occupant protection device according to a fifth invention comprises: at least a detection system as mentioned above; an occupant protection means; and a control means.

The occupant protection means of this invention is a means which operates for protecting a vehicle occupant. The occupant protection means are typically an airbag and a seat belt.

The control means is a means for controlling the operation of the occupant protection means according to the information about the body size of a vehicle occupant as the object seated which was derived by the deriving means of the detection system. For example, the operation of an inflator as a gas supplying means for supplying gas for inflating and deploying the airbag and the operation of a pretensioner and a retractor for controlling the seat belt in the event of a vehicle collision is controlled by the control means based on the information about the occupant's body size. According to this structure, the operation of the occupant protection means can be reasonably controlled using the information about the vehicle occupant which was easily and precisely detected by the detection system, thereby ensuring the protection of the vehicle occupant. It is also possible to reduce the cost of the device.

### (Sixth invention)

According to a sixth invention, an embodiment of the occupant protection means comprises at least an airbag, which is inflated and deployed into an occupant protective area, and an inflator for supplying gas for inflating and deploying said airbag in the event of the vehicle collision. The control means controls the gas supply mode of the inflator relative to the airbag according to the information about the body size of the vehicle occupant. That is, the pressure and the amount of gas to be supplied to the airbag from the inflator in the event of vehicle collision are controlled to vary according to the body size of the vehicle occupant. Specifically, in case where it is detected that an occupant having a small body size such as a child is seated, the pressure and the amount of gas to be supplied to the airbag from the inflator are controlled to be lower or smaller than the case where it is detected that an occupant having a large body size such as an adult is seated. According to this structure, the deployment form of the airbag in the event of a vehicle collision can be reasonably controlled using the information about the vehicle occupant which was easily and precisely detected by the detection system, thereby ensuring the protection of the vehicle occupant.

### (Seventh invention)

A vehicle according to a seventh invention is a vehicle comprising an occupant protection device as described above. According to this structure, a vehicle provided with the occupant protection device which is effective for ensuring the protection of the vehicle occupant can be obtained. It is also possible to reduce the cost of the device.

### (Eighth invention)

A vehicle according to an eighth invention is a vehicle comprising: at least a running system including an engine, an electrical system, a drive control means, a vehicle seat, a camera, and a processing means.

The running system including an engine is a system relating to driving of the vehicle by the engine. The electrical system is a system relating to electrical parts used in the vehicle. The drive control means is a means having a function of conducting the drive control of the running system and the electrical system. The camera has a function of being focused on an object on the vehicle seat. The processing means is a means having a function of processing information from the camera by the drive control means. The processing means comprises a detection system as described above. The information about the object seated which was detected by the detection system is properly processed by the processing means and is used for various controls relating to the vehicle, for example, the occupant protection means which operates for protecting the vehicle occupant.

According to this structure, a vehicle in which the information about the vehicle occupant which is easily and precisely detected by the detection system is used for various controls relating to the vehicle can be obtained. It is also possible to reduce the cost of the device.

### (Ninth invention)

A detection method according to a ninth invention is a method for detecting information about an object seated in a vehicle seat and comprises at least first through fifth steps.

The first step is a step for detecting a three-dimensional surface profile of the object seated relating to a single view point. The second step is a step for digitizing the three-dimensional surface profile detected in the first step into digital coordinates. The third step is a step for detecting information about the seat condition of the vehicle seat. The fourth step is a step for setting a reference plane for defining the profile of the far side invisible from the single view point among the respective parts of the three-dimensional surface profile based on the information about the seat condition of the vehicle seat detected in the third step. The fifth step is a step for correcting the digitized coordinates, which were digitized in the second step, by the reference plane, which was set in said fourth step, and deriving the information about the object seated from the digitized coordinates thus corrected. By conducting the first through fifth steps sequentially, the information about the object seated in the vehicle seat can be detected. The detection method as mentioned above is typically conducted by the detection system as described above.

Therefore, according to the detection method, the three-dimensional surface profile of the object seated is detected from the single view point and the technology for setting the reference plane which defines the profile of the far side, i.e. the side invisible from the single view point, is devised using the information about the seat condition of the vehicle seat, thereby enabling the easy and precise detection of the information about the object seated in the vehicle seat. This also enables reduction in cost of the device relating to the detection.

### (Tenth invention)

According to a tenth invention in an embodiment of the detection method, the fourth step sets at least one of three reference planes as the reference plane based on the information about the seat condition of the vehicle seat, wherein the three reference planes are a first reference plane along a side surface of a seat cushion of the vehicle seat, a second reference plane along a surface of a seat back of the vehicle seat, and a third reference plane along a surface of the seat cushion of the vehicle seat. This embodiment is typically conducted by the corresponding embodiment of the detection system mentioned before.

Therefore, this embodiment of the detection method enables precise setting of the reference plane.

### (Eleventh invention)

A further embodiment of the detection method according to an eleventh invention is a method described above and further comprises a body-part-information detecting step for detecting information about body parts of a vehicle occupant as said object seated, including the positions and width of the head, the neck, the shoulder, the lumbar, and the back of the vehicle occupant. The fourth step corrects the reference plane according to the information about the body parts detected by the body-part-information detecting step. The detection method is typically conducted by the corresponding embodiment of the detection system.

Therefore, according to this detection method, the setting accuracy of the reference plane can be increased by reflecting the information about the occupant's body parts in setting the reference plane.

### (Twelfth invention)

According to a twelfth invention, a still further embodiment of the detection method is a method described above and is characterized in that the fourth step sets the reference plane which is curved along the three-dimensional surface profile of said object seated. The detection method is typically conducted by the corresponding embodiment of the detection system.

Therefore, according to this detection method, the setting accuracy of the reference plane can be further increased.

### Effects of the Invention

As described in the above, according to the present invention, a three-dimensional surface profile of an object seated is detected from a single view point and the technology for setting a reference plane which defines the profile of the far side, i.e. the side invisible from the single view point, is devised, thereby enabling the easy and precise detection of the information about the object seated in the vehicle seat.

### Brief explanation of the drawings

Fig. 1 is an illustration showing the structure of an occupant protection device 100, which is installed in a vehicle, according to an embodiment.
Fig. 2 is a perspective view showing a vehicle cabin taken from a camera 112 side.
Fig. 3 is a flow chart of "body size determination process" in the occupant protection device 100 for determining the body size of a vehicle occupant seated in a driver seat.
Fig. 4 is a side view of a vehicle cabin including an area photographed by the camera 112.
Fig. 5 is a top view of the vehicle cabin including the area photographed by the camera 112.
Fig. 6 is a diagram showing the outline of the principle of the stereo method.
Fig. 7 is a diagram showing the outline of the principle of the stereo method.
Fig. 8 is an illustration showing an aspect of pixel segmentation in the embodiment.
Fig. 9 is an illustration showing a segmentation-processed image C2 of a three-dimensional surface profile.
Fig. 10 is an illustration showing a transformation-processed image C3 of the three-dimensional surface profile.
Fig. 11 is an illustration showing a transformation-processed image C4 of the three-dimensional surface profile.
Fig. 12 is an illustration schematically showing the setting of reference planes S 1 through S3.
Fig. 13 is an illustration showing a cutting-processed image C5 defined by the reference planes S 1 through S3.
Fig. 14 is an illustration showing the structure of an occupant protection device 200, which is installed in a vehicle, according to an embodiment.
Fig. 15 is a flow chart of "body size determination process" in the occupant protection device 200 for determining the body size of a vehicle occupant seated in a driver seat.
Fig. 16 is a side view of a vehicle cabin for explaining the setting of the reference planes T1 through T3.
Fig. 17 is a top view of the vehicle cabin for explaining the setting of the reference planes T1 through T3.
Fig. 18 is a front view of the vehicle cabin for explaining the setting of the reference planes T1 through T3.
Fig. 19 is a front view of the vehicle cabin for explaining the setting of reference planes T1 through T3 according to another embodiment.

### Best Modes for carrying out the Invention

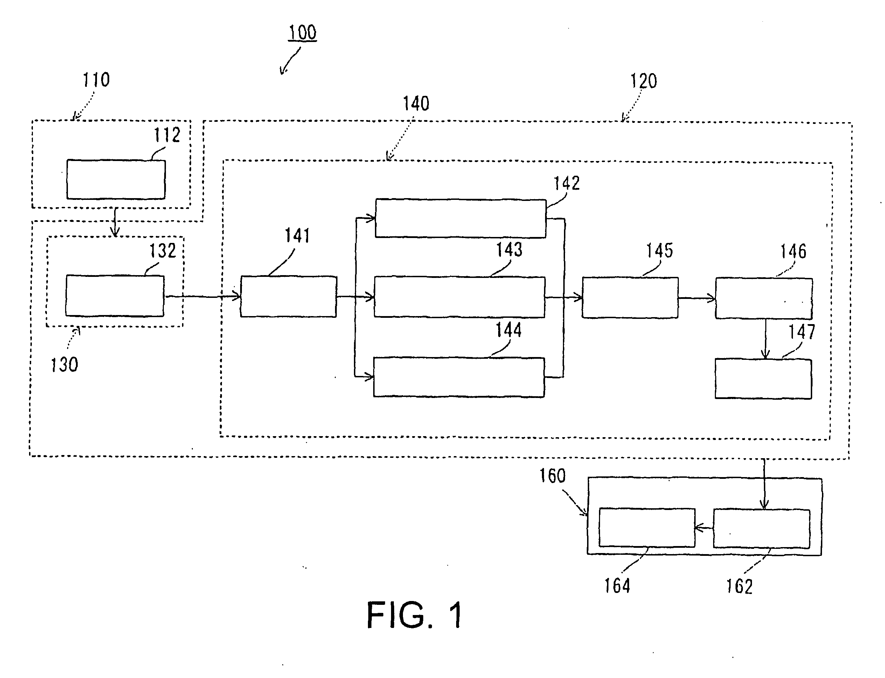

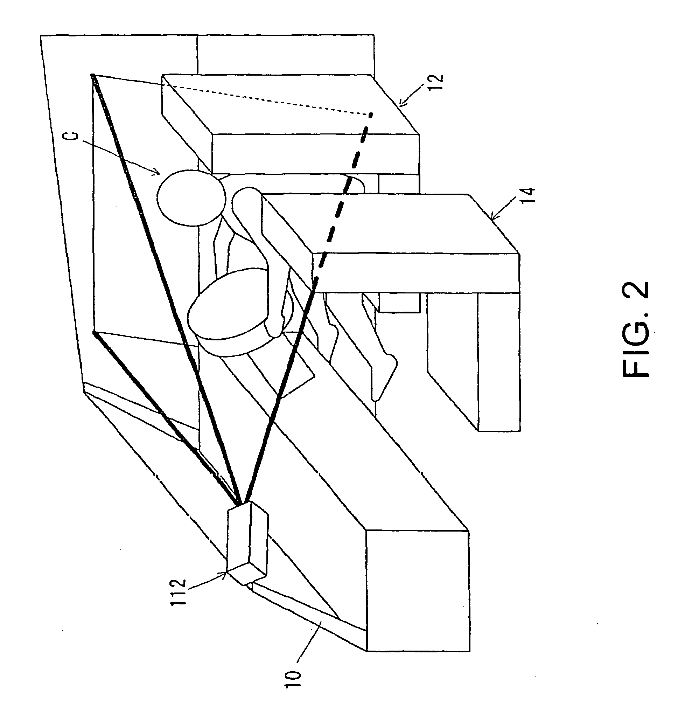

Hereinafter, embodiments of the present invention will be described in detail with reference to drawings. First, description will be made as regard to an occupant protection device 100 as an embodiment of the "occupant protection device" according to the present invention with reference to Fig. 1 and Fig. 2.

The structure of the occupant protection device 100, which is installed in a vehicle, of this embodiment is shown in Fig. 1.

As shown in Fig. 1, the occupant protection device 100 of this embodiment is installed for protecting an occupant in a driver seat in an automobile which corresponds to the "vehicle" of the present invention. The occupant protection device 100 mainly comprises a photographing means 110, a control means 120, and an airbag module (airbag device) 160. The vehicle comprises a running system including an engine for driving the vehicle by the engine, an electrical system for electrical parts used in the vehicle, a drive control means for conducting the drive control of the running system and the electrical system, a processing means (control means 120) for processing the information from a camera 112 as will be described later by the drive control means, and the like.

The photographing means 110 comprises the camera 112 of a 3D (three-dimensional imaging) type using a CCD (charge-coupled device). The camera 112 is installed to be built in an instrument panel, an A-pillar, or the periphery of a windshield in a front portion of an automobile and is disposed to face in a direction capable of photographing one or more occupants. As a specific example of the installation of the camera 112, a perspective view of the cabin of the automobile taken from the camera 112 side is shown in Fig. 2. As shown in Fig. 2, the camera 112 is disposed at an upper portion of an A-pillar 10 on the side of the passenger seat 14 to face in a direction capable of photographing an occupant C seated in a driver seat 12 with focusing the camera on the occupant C.

The control means 120 comprises at least a digitizing means 130, a computing means (MPU: micro processing unit) 140, an input/output device, a storage device, and a peripheral device, but the input/output device, the storage device, and the peripheral device are not shown. The digitizing means 130 comprises an image processing unit 132 where images taken by the camera 112 are processed. The computing means 140 comprises at least a coordinate transformation unit 141, a seat cushion height detector 142, a seat back inclination detector 143, a seat slide position detector 144, a plane setting unit 145, a volume calculating unit 146, and a body size determination unit 147.

In addition, an input element is installed in the vehicle to detect information about collision prediction or collision occurrence of the vehicle, information about the driving state of the vehicle, information about traffic conditions around the vehicle, information about weather condition and about time zone, and the like and to input such detected information to the control means 120, but not shown. If the information about the seat condition can be obtained from outside, the information is used instead of the information from the detectors. Not all of the information about the seat condition such as the seat cushion height, the seat back inclination, and the seat slide position are necessary. In the absence of one of these, the information may be estimated from other information, alternatively, may be a specified value.

The airbag module 160 comprises at least an inflator 162 and an airbag 164. The airbag module 160 is a means to be activated to protect a vehicle occupant and composes the "occupant protection means" of the present invention.

The inflator 162 has a function as a gas supplying means which supplies gas into the airbag 164 for deployment according to the control signal from the control means 120 in the event of a vehicle collision. The inflator 162 corresponds to the "inflator" of the present invention. Accordingly, the airbag 164 is inflated and deployed into an occupant protective area for protecting the vehicle occupant. The airbag 164 corresponds to the "airbag" of the present invention.

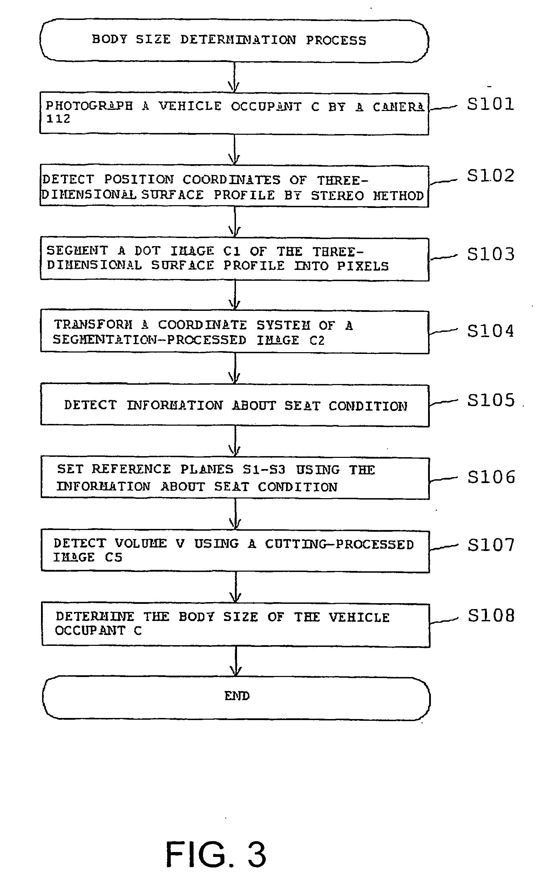

Hereinafter, the action of the occupant protection device 100 having the aforementioned structure will be described with reference to Fig. 3 through Fig. 13 in addition to Fig. 1 and Fig. 2.

Fig. 3 is a flow chart of "body size determination process" in the occupant protection device 100 for determining the body size of the vehicle occupant seated in the driver seat. In this embodiment, the "body size determination process" is carried out by the photographing means 110 (the camera 112) and the control means 120 as shown in Fig. 1. The "detection system" of the present invention is composed of the photographing means 110 and the control means 120 for detecting information about the vehicle occupant C seated in the driver seat 12.

In a step S101 shown in Fig. 3, an image is taken by the camera 112 in a state that the camera 112 is focused on the vehicle occupant (the vehicle occupant C as shown in Fig. 2) in the driver seat. The camera 112 is a camera for detecting a three-dimensional surface profile, of the vehicle occupant C as the "object seated" of the present invention, from a single view point. The camera 112 corresponds to the "three-dimensional surface profile detecting means" or the "camera" of the present invention. As the camera 112, a monocular C-MOS 3D camera or a binocular stereo 3D camera may be used. The step S101 is a step for detecting the three-dimensional surface profile of the vehicle occupant C from the single view point and corresponds to the "first step" of the present invention.

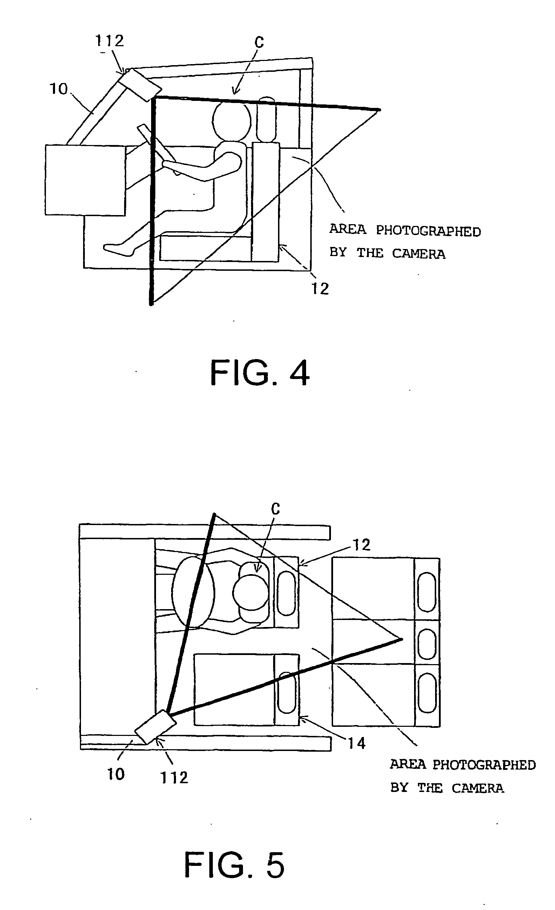

The camera 112 is set to be actuated, for example, when an ignition key is turned on or when a seat sensor of the seat detects a vehicle occupant. A side view of a vehicle cabin including an area photographed by the camera 112 is shown in Fig. 4 and a top view of the vehicle cabin is shown in Fig. 5.

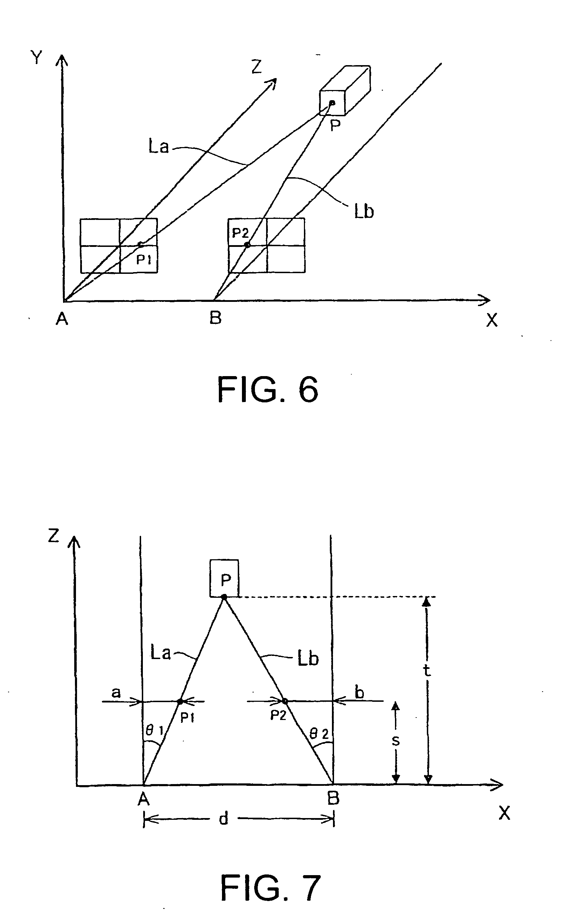

Then, in the step S102 shown in Fig. 3, the distance from the camera 112 to the vehicle occupant C is detected by the stereo method. The stereo method is a known technology. That is, two cameras are located on the left and the right just like human eyes to take respective images. The parallax between the cameras is calculated from two images taken by the left camera and the right camera. Based on the parallax, the distance from the cameras to the target is measured. The principle of the stereo method will be outlined with reference to Fig. 6 and Fig. 7.

As shown in Fig. 6, assuming two images of a same object taken by two cameras which are disposed at a point A and a point B, respectively, at a certain distance and parallel to each other, an image of a single point P on the object appears on lines La, Lb on the two images. If corresponding points P1 and P2 corresponding to the images are obtained by searching on the lines La and Lb, the three-dimensional position of the point P on the object can be calculated according to the principle of triangulation.

As shown in Fig. 7, the corresponding points P1 and P2 are detected by searching the object on the basis of the points A and B spaced apart from the two images by a distance "s". The points P1 and P2 are shifted by a distance "a" and a distance "b", respectively, along X direction. From the distances "s", "a", and "b", angles θ1 and θ2 can be calculated.

If the distance on the Z axis to the point P is "t", the distance "d" between the points A and B is represented by a relational expression: d = t × tan (θ1) + t × tan (θ2) = t × (tan (θ1) + tan (θ2)). From this relational expression, t = d / (tan (θ1) + tan (θ2)) so that the distance "t" to the object (a Z-coordinate of the point P) is obtained. Simultaneously, an X-coordinate of the point P is obtained. In addition, with regard to Y-Z coordinate, a Y-coordinate of the point P is obtained.

Accordingly, by photographing the area shown in Fig. 4 and Fig. 5 with the camera 112, the positional coordinates of the three-dimensional surface profile of the vehicle occupant C are detected and a dot image C1 of the three-dimensional surface profile is obtained.

In the step S102 shown in Fig. 3, the distance from the camera 112 to the vehicle occupant C may be detected by the Time-of-Flight method. The Time-of-Flight method is a known technology. That is, the distance to an object can be measured by measuring a time from emission of light to reception of the light reflecting on the object.

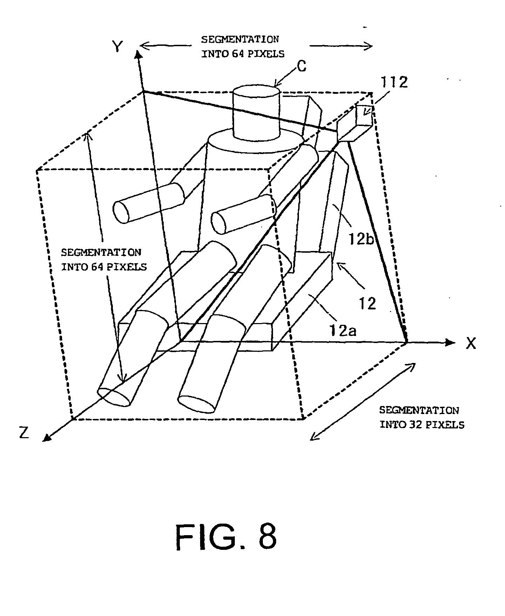

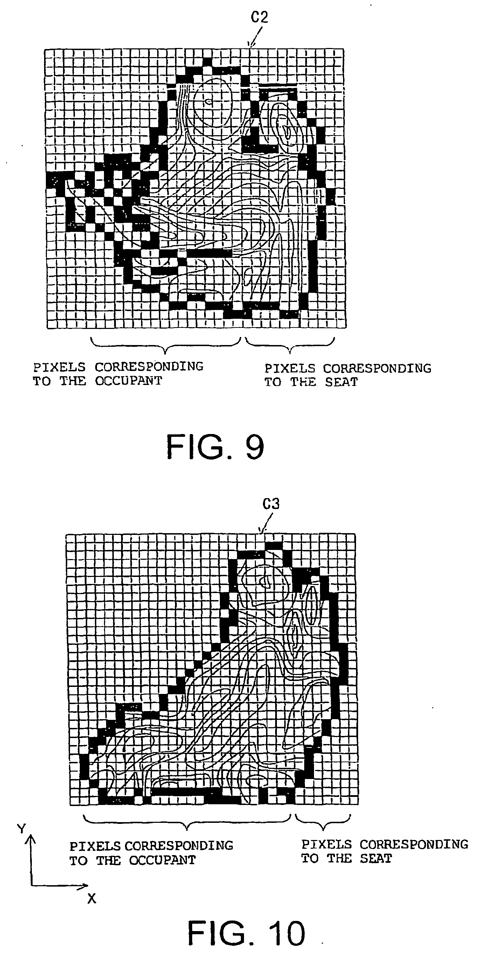

In a step S103 shown in Fig. 3, a segmentation process is conducted to segment the dot image C1 of the three-dimensional surface profile obtained in the step S102 into a large number of pixels. This segmentation process is carried out by the image processing unit 132 of the digitizing means 130 in Fig. 1. In the segmentation process, the dot image C1 of the three-dimensional surface profile is segmented into three-dimensional lattices: (X64) × (Y64) × (Z32). An aspect of pixel segmentation in this embodiment is shown in Fig. 8. As shown in Fig. 8, an origin is the center of a plane to be photographed by the camera, an X axis is lateral, a Y axis is vertical, and a Z axis is anteroposterior. With respect to the dot image Clof the three-dimensional surface profile, a certain range of the X axis and a certain range of the Y axis are segmented into respective 64 pixels, and a certain range of the Z axis is segmented into 32 pixels. It should be noted that, if a plurality of dots are superposed on the same pixel, an average is employed. According to the process, for example, a segmentation-processed image C2 of the three-dimensional surface profile as shown in Fig. 9 is obtained. The segmentation-processed image C2 corresponds to a perspective view of the vehicle occupant taken from the camera 112 and shows a coordinate system about the camera 112. As mentioned above, the image processing unit 132 which conducts the process for obtaining the segmentation-processed image C2 is a digitizing means for digitizing the three-dimensional surface profile detected by the camera 112 and corresponds to the "digitizing means" of the present invention. The step S103 is a step for digitizing the three-dimensional surface profile to digital coordinates and corresponds to the "second step" of the present invention.

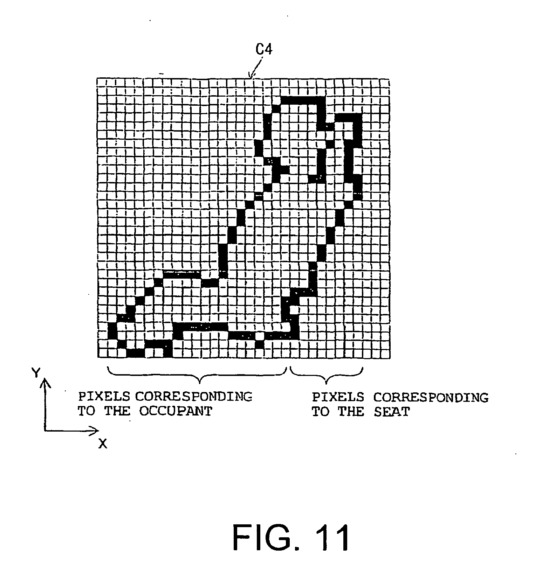

In the step S104 shown in Fig. 3, a coordinate transformation process of the segmentation-processed image C2 obtained in the step S103 is conducted. The coordinate transformation process is carried out by the coordinate transformation unit 141 of the computing means 140 in Fig. 1. In the coordinate transformation process, the segmentation-processed image C2 as the coordinate system about the camera 112 is transformed into a coordinate system about the vehicle body in order to facilitate the detection of information about the seat condition from the image and to facilitate the setting of reference planes S1 through S3 as will be described later. Specifically, the image of the vehicle occupant C from a viewpoint of the camera 112 is transformed into an image of the vehicle occupant C from a viewpoint of a left side of the vehicle body. That is, in transformation, the X axis is set to extend in the front-to-rear direction of the vehicle, the Y axis is set to extend in the upward direction of the vehicle, and the Z axis is set to extend in the left-to-right direction. Accordingly, for example, the segmentation-processed image C2 obtained in the step S103 is transformed into a transformation-processed image C4 as shown in Fig. 11 via a transformation-processed image C3 as shown in Fig. 10.

In a step S105 shown in Fig. 3, the transformation-processed image C4 shown in Fig. 11 obtained in the step S104 is used to conduct a detection process of information about the seat condition. The detection process is carried out by the seat cushion height detector 142, the seat back inclination detector 143, and the seat slide position detector 144 shown in Fig. 1. The seat cushion height detector 142, the seat back inclination detector 143, and the seat slide position detector 144 are means for detecting the information about the driver seat 12 and correspond to the "seat-information detecting means'' of the present invention. The step S105 is a step for detecting the information about the seat condition of the vehicle seat and corresponds to the "third step" of the present invention.

The seat cushion height detector 142 detects information about the height of a seat cushion (a seat cushion 12a shown in Fig. 8) from the three-dimensional profile of the transformation-processed image C4. For this detection, it is preferable to take the structure of an adjustable type seat and the structure of a stationary type (fixed type) seat into consideration. In case where the adjustable type seat is provided with a device such as a seat lifter, information about the height of the seat cushion is collected from the device or the height is detected from a seat edge. On the other hand, in case of the stationary type seat, the height of the seat cushion is previously stored.

The seat back inclination detector 143 detects information about the inclination of a seat back (a seat back 12b in Fig. 8) from the three-dimensional profile of the transformation-processed image C4. For this detection, a plurality of points on edges of the seat back are detected from the transformation-processed image C4, and the average of inclination of lines connecting the points is defined as the inclination of the seat back.

The seat slide position detector 144 detects information about the anteroposterior position of the seat from the three-dimensional profile of the transformation-processed image C4. Since the joint portion between the seat cushion (the seat cushion 12a in Fig. 8) and the seat back (the seat back 12b in Fig. 8) is at the rear end of the seat cushion, the anteroposterior position of the seat is detected by detecting the position of the joint portion. The Y coordinate Ya of the joint portion is constant so that the position of the joint portion is specified from an intersection of a line extending along the extending direction of the seat back and the Y coordinate Ya. Alternatively, in case where the seat is provided with a device electrically moving the seat in the anteroposterior direction, information about the anteroposterior position of the seat cushion is collected from the device.

In the step S106 shown in Fig. 3, a setting process for setting the reference planes S1 through S3 is conducted using the information about the seat condition obtained in the step S105. The setting process is conducted by the plane setting unit 145 shown in Fig. 1. The setting process sets the reference planes S1 through S3 (corresponding to the "reference plane" of the present invention) for defining the profile of the far side of the vehicle occupant C, wherein the far side is a side invisible from the camera 112. The plane setting unit 145 for setting the reference planes S 1 through S3 corresponds to the "reference plane setting means" of the present invention. The setting process is conducted taking into consideration that the vehicle occupant C is less likely to project outside from the sides of the seat, backward from the seat back, or downward from the seat cushion. The step S 106 is a step for setting the reference planes which define the profile of the far side, i.e. the profile invisible from a single viewpoint, among the respective parts of the three-dimensional surface profile based on the vehicle information about the seat condition detected in the above and corresponds to the "fourth step" of the present invention.

The far side of the three-dimensional surface profile is portions which are not detected by the single viewpoint. If the profile of the far side can be estimated with high accuracy by the setting of the reference planes, the information about the vehicle occupant C can be easily detected with high accuracy. For this, this embodiment employs a structure for setting three reference planes S1 through S3 based on the information of the driver seat 12. It is based on the idea that the vehicle seat is a part adjacent to the far side among vehicle parts so that the use of the information about the seat condition of the vehicle seat to set the reference planes is effective for estimating the profile of the far side with high accuracy.

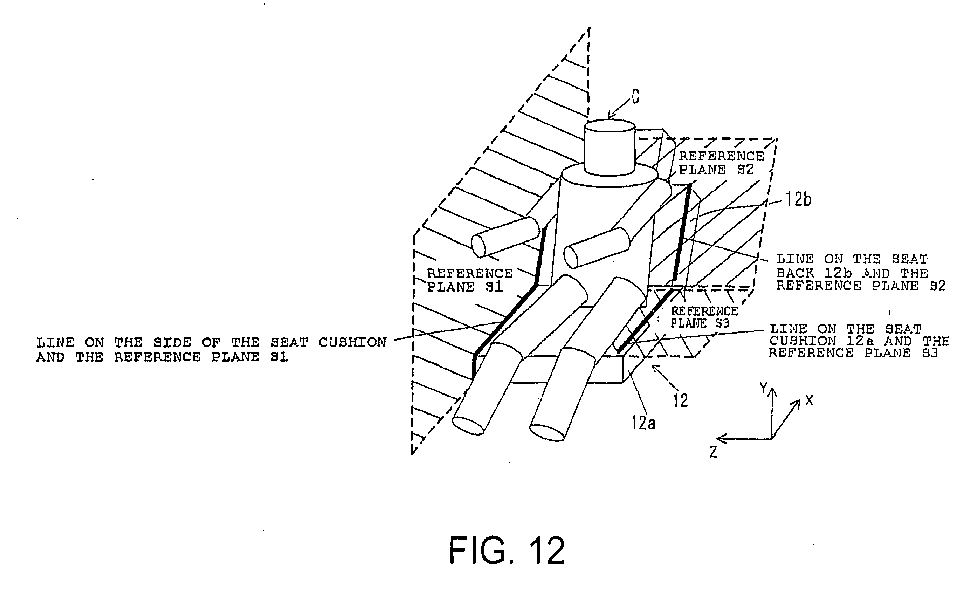

The aspect of setting the reference planes S1 through S3 in this embodiment is schematically shown in Fig. 12.

Since the vehicle occupant C seated in the seat 12 is less likely to project outward from the right or left side of the seat 12, a reference plane S1 is set along the side of the seat as shown in Fig. 12. The reference plate S1 corresponds to the "first reference plane" of the present invention. The reference plane S1 is parallel to the side of the seat cushion 12a of the seat 12, the X axis, and the Y axis.

Since the vehicle occupant C seated in the seat 12 is less likely to project rearward from the seat back 12b of the seat 12 as shown in Fig. 12, a reference plane S2 is set along the seat back 12b. The reference plane S2 corresponds to the "second reference plane" of the present invention. The reference plane S2 is defined by shifting the line of the seat back in the direction of the X axis, as one of the information about the seat condition obtained in the step S 105, for a distance corresponding to the thickness of the seat back 12b. The reference plane S2 is parallel to the Z axis. It should be noted that the thickness of the seat back 12b is previously stored.

Since the vehicle occupant C seated in the seat 12 is less likely to project beneath the seat cushion 12a of the seat 12 as shown in Fig. 12, a reference plane S3 is set along the seat cushion 12a. The reference plane S3 corresponds to the "third reference plane" of the present invention. The reference plane S3 is defined by the position of the seat cushion, as one of the information about the seat condition obtained in the step S105. The reference plane S3 is parallel to the Z axis. As for the setting of the reference plane S3, the length of the reference plane S3 in the direction along the X axis is set to coincide with the anteroposterior length of the seat cushion 12a not to cut the calves of the vehicle occupant C by the reference plate S3.

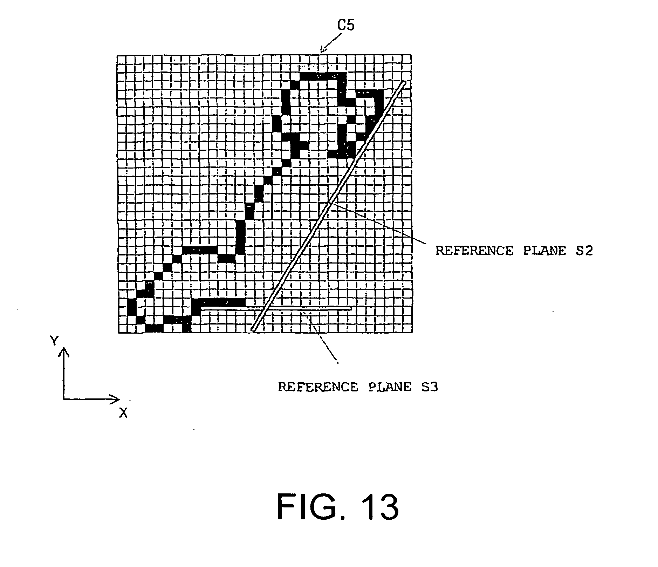

Then, the transformation-processed image C4 shown in Fig. 11 obtained in the step S 104 is cut along the reference planes S 1 through S3 obtained in the step S 106, thereby obtaining a cutting-processed image C5 defined by the reference planes S1 through S3 as shown in Fig. 13.

In a step S107 shown in Fig. 3, a calculation process for calculating the volume V is conducted by using the cutting-processed image C5 shown in Fig. 13 The calculation process is carried out by the volume calculating unit 146 shown in Fig. 1. Specifically, the volume V is derived from the pixels of the cutting-processed image C5 by summing corresponding pixels for the distance to the reference plane S1. The volume V corresponds to the volume of the vehicle occupant C.

In a step S108 shown in Fig. 3, a determination process for determining the body size of the vehicle occupant C by using the volume V obtained in the step S 107. The determination process is carried out by the body size determination unit 147 shown in Fig. 1. Specifically, since the density of human is nearly equal to the density of water, a weight W is obtained by multiplying the volume V with the density 1 [g/cm³]. The body size of the vehicle occupant C is determined according to the weight W.

The body size determination unit 147 and the aforementioned volume calculating unit 146 are means for deriving the volume V and the body size of the "information about the object seated" of the present invention and correspond to the "deriving means" of the present invention. The step S107 and the step S108 are steps for correcting the digitized coordinates by the reference planes set as mentioned above and deriving the information about the vehicle occupant C from the digitized coordinates thus corrected and correspond to the "fifth step" of the present invention:

In the "occupant protection process" of the occupant protection device 100 of this embodiment, an "airbag deployment process" is carried out in the event of a vehicle collision after the aforementioned "body size determination process" as described above with reference to Fig. 3. The airbag deployment process is carried out by the control means 120 (corresponding to the "control means'' of the present invention) which receives information on detection of vehicle collision occurrence. The control means 120 controls the airbag module 160 shown in Fig. 1.

Specifically, in the airbag deployment process, the airbag 164 shown in Fig. 1 is controlled to be inflated and deployed into the form according to the body size of the vehicle occupant C determined in the step S108 shown in Fig. 3. That is, in this embodiment, the pressure and the amount of gas to be supplied to the airbag 164 from the inflator 162 shown in Fig. 1 in the event of vehicle collision are controlled to vary according to the body size of the vehicle occupant C. Therefore, the inflator 162 used in this embodiment preferably has a plurality of pressure stages so that it is capable of selecting pressure for supplying gas. According to this structure, the airbag 164 is inflated and deployed into proper form in the event of vehicle collision, thereby ensuring the protection of the vehicle occupant C.

In the present invention, it can be adapted to control an occupant protection means other than the airbag module, for example, to control the operation of unwinding and winding a seat belt, according to the result of determination of the "body size determination process".

Since the occupant protection device 100 of this embodiment has the structure of detecting the three-dimensional surface profile of the vehicle occupant C from a single view point of the camera 112 and setting the reference planes S1 through S3 defining the profile of the far side, i.e. the profile invisible from a single viewpoint, of the vehicle occupant C according to the information about the seat condition referring to the vehicle occupant C as described in the above, the three-dimensional profile of the far side of the vehicle occupant C can be detected easily and precisely without requiring much calculation amount. Therefore, the volume V of the vehicle occupant C and the body size of the vehicle occupant C can be precisely detected. When the vehicle occupant is in the normal posture, the detection error is effectively reduced. It is also possible to reduce the cost of the device.

According to this embodiment, the airbag 164 can be controlled to be inflated and deployed into a reasonable form in the event of vehicle collision, using the information about the vehicle occupant C easily and precisely detected.

This embodiment also provides a vehicle with the occupant protection device 100 which is effective for ensuring the protection of the vehicle occupant.

In the present invention, an occupant protection device 200 having different structure capable of providing improved detection accuracy may be employed instead of the occupant protection device 100 having the aforementioned structure.

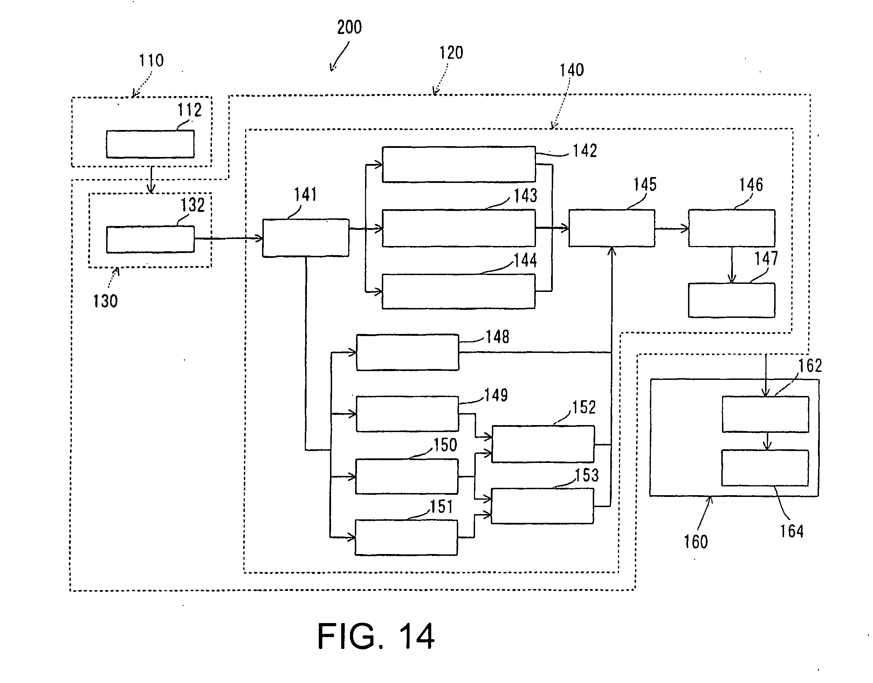

Hereinafter, the occupant protection device 200 as an embodiment of the "occupant protection device" of the present invention will be described with reference to Fig. 14 through Fig. 19.

The structure of the occupant protection device 200, which is installed in a vehicle, according to this embodiment is shown in Fig. 14.

As shown in Fig. 14, the occupant protection device 200 of this embodiment has a structure similar to the occupant protection device 100 except that the computing means 140 further includes a head detecting unit 148, a neck detecting unit 149, a shoulder detecting unit 150, a lumbar detecting unit 151, a shoulder width detecting unit 152, and a back detecting unit 153. Since the components other than the above additional components are the same as those of the occupant protection device 100, the following description will be made as regard only to the additional components.

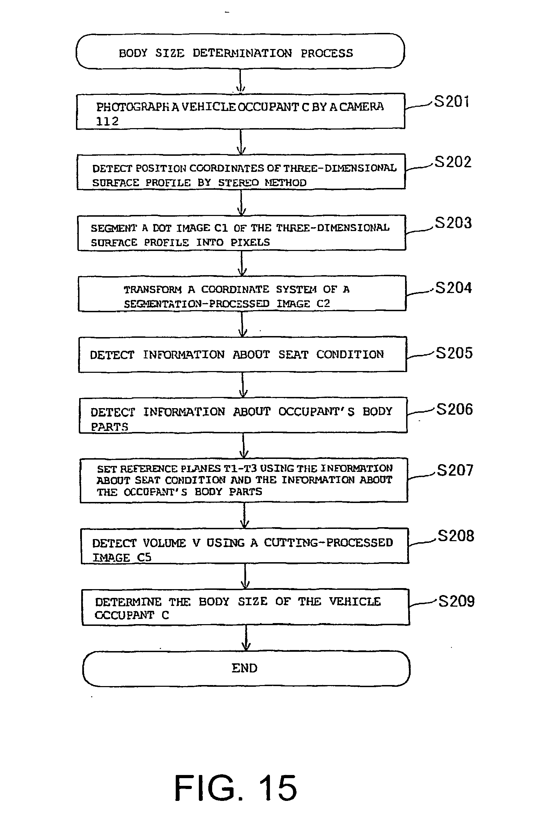

Fig. 15 is a flow chart of the "body size determination process" for determining the body size of a vehicle occupant in a driver seat by the occupant protection device 200. Steps S201 through S205 shown in Fig. 15 are conducted with the same procedures as the steps S101 through S105 shown in Fig. 3.

In a step S206 shown in Fig. 15, a detection process for detecting information about occupant's body parts is conducted from the transformation-processed image C4 as shown in Fig. 11 obtained in the step S204 (the step S104). This detection process is carried out by the head detecting unit 148, the neck detecting unit 149, the shoulder detecting unit 150, the lumbar detecting unit 151, the shoulder width detecting unit 152, and the back detecting unit 153 in Fig. 15. The head detecting unit 148, the neck detecting unit 149, the shoulder detecting unit 150, the lumbar detecting unit 151, the shoulder width detecting unit 152, and the back detecting unit 153 are means for detecting information about occupant's body parts such as the positions and the width of the head, the neck, the shoulder, the lumber, and the back of the vehicle occupant C as the object seated and compose the "body-part-information detecting means" of the present invention. In addition, the step S206 is a step for detecting information about occupant's body parts such as the positions and the width of the head, the neck, the shoulder, the lumber, and the back of the vehicle occupant C and corresponds to the "body-part-information detecting step" of the present invention.

The head detecting unit 148 detects information about the position of the head from the three-dimensional profile of the transformation-processed image C4. The neck detecting unit 149 detects information about the position of the neck from the three-dimensional profile of the transformation-processed image C4. The shoulder detecting unit 150 detects information about the position of the shoulder from the three-dimensional profile of the transformation-processed image C4. The lumbar detecting unit 151 detects information about the position of the lumbar from the three-dimensional profile of the transformation-processed image C4. According to the information detected, three-dimensional position information of the respective parts such as the head, the neck, the shoulder, and the lumbar can be obtained. The shoulder width detecting unit 152 detects information about the shoulder width from range difference between the position of the neck detected by the neck detecting unit 149 and the position of the shoulder detected by the shoulder detecting unit 150. The back detecting unit 153 detects information about the position of the back from lines passing through the position of the shoulder detected by the shoulder detecting unit 150 and the position of the lumbar detected by the lumbar detecting unit 151.

In a step S207 shown in Fig. 15, reference planes T1 through T3 are set based on the information about the seat condition detected in the step S205 and the information about the occupant's body parts detected in the step S206. That is, the reference planes T1 through T3 are obtained by correcting the reference planes S1 through S3, which were set according to the information about the seat condition, using the information about the occupant's body parts.

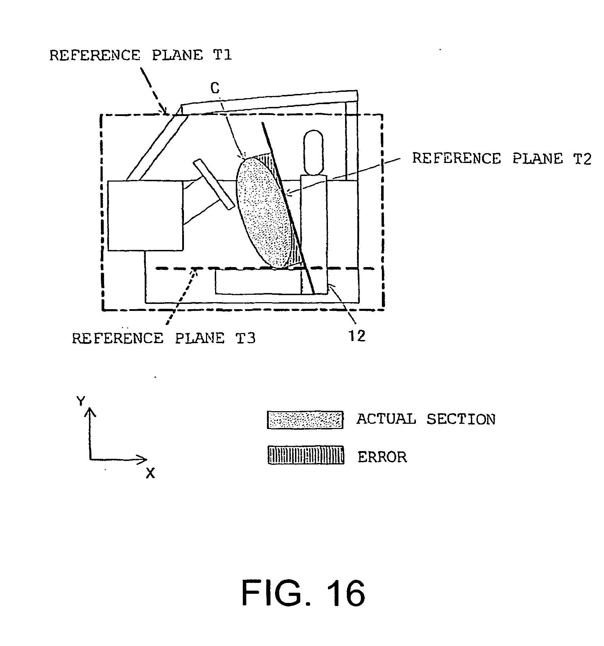

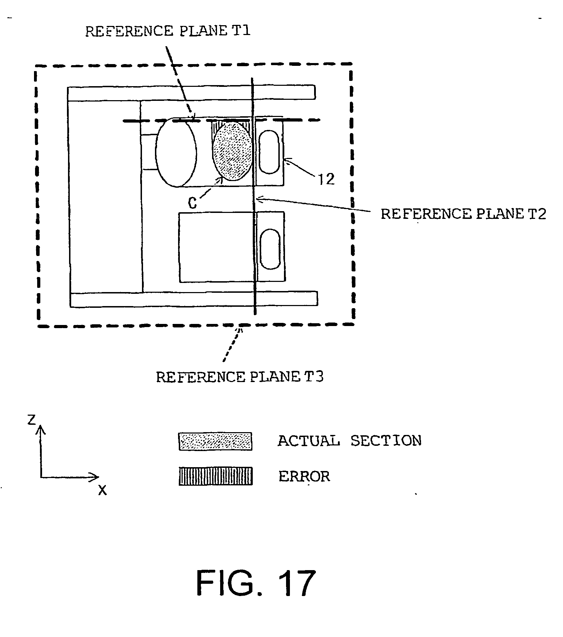

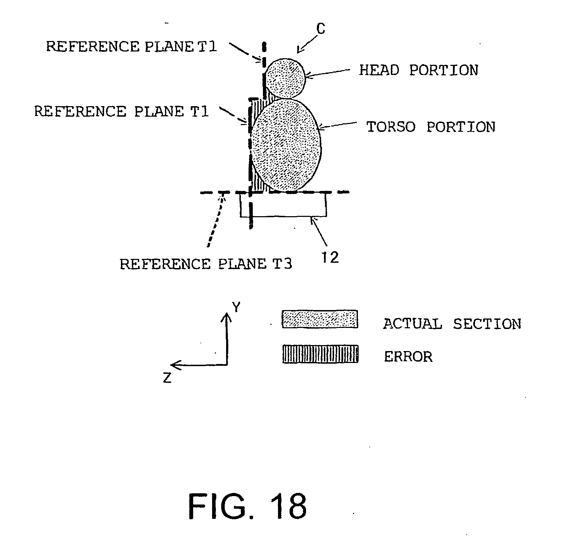

For explaining the reference planes T1 through T3, a side view of a vehicle cabin is shown in Fig. 16, a top view of the vehicle cabin is shown in Fig. 17, and a front view of the vehicle cabin is shown in Fig. 18.

As shown in Fig. 16, the reference plane T2 corresponding to the back of the vehicle occupant C can be obtained by moving the reference plane S2 along the X-Y plane to the position of the back so that the reference plane S2 is corrected to the reference plane T2. The reference plane T2 is set to be parallel to the extending direction of the back.

As shown in Fig. 17 and Fig. 18, the reference plane T1 corresponding to the head and the shoulder width of the vehicle occupant C is obtained by moving the reference plane S1 along the Z axis to correspond to the position of the head and the shoulder width so that the reference plane S1 is corrected to the reference plane T1. The reference plane T1 is set at a certain distance from the surface of the head and is set at a position proportional to the shoulder width with regard to the portion other than the head.

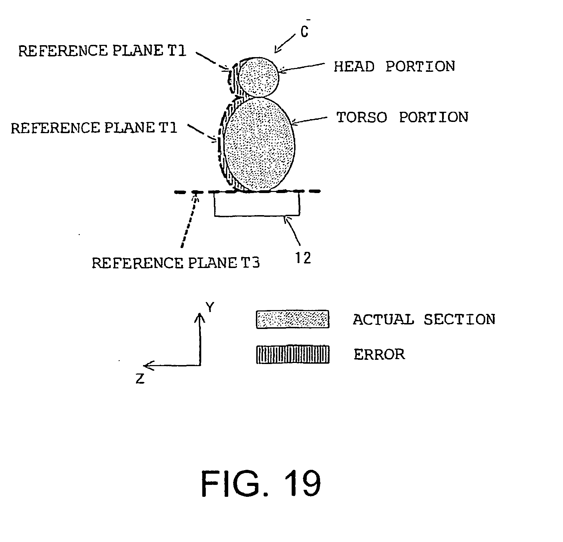

As for the setting of the reference plane T1, it is possible to improve the detection accuracy by devising the aforementioned setting method. That is, in Fig. 16 through Fig. 18, it is possible to reduce the error relative to the actual section. For this, the vehicle occupant C on the X-Y plane is dissected in a head portion and a torso portion and the respective centers of gravity of the head portion and the body portion are calculated. The position of the reference plane T1 is varied according to the distances from the centers of gravity. As shown in Fig. 19, the reference plane T1 is preferably curved along the three-dimensional surface profile of the vehicle occupant C, not flat. Such setting of the reference plane is grounded in the ideas that curved reference planes, not flat planes, enable further precise estimation because the three-dimensional surface profile of the vehicle occupant is normally curved.

According to the structure, it is possible to reduce the detection error without being affected by the posture of the vehicle occupant C. In addition, it is possible to reduce the volume error in the normal posture of the vehicle occupant C.

After that, in a step S208 and a step S209 shown in Fig. 15, the volume V is detected (derived) and the body size of the vehicle occupant C is determined by procedures similar to the step S107 and the step S108 shown in Fig. 3.

Since the occupant protection device 200 of this embodiment has the structure of detecting the three-dimensional surface profile of the vehicle occupant C from a single view point of the camera 112 and setting the reference planes T1 through T3 defining the profile of the far side of the vehicle occupant C from the single view point according to the information about the seat condition referring to the vehicle occupant C, the three-dimensional profile of the far side of the vehicle occupant C can be detected easily and precisely without requiring much calculation amount similarly to the occupant protection device 100. Therefore, the volume V of the vehicle occupant C and the body size of the vehicle occupant C can be precisely detected without being affected by the posture of the vehicle occupant C because the information about the occupant's body parts is used in addition to the information about the seat condition for setting the reference planes T1 through T3. When the vehicle occupant is in the normal posture, the detection error is reduced more effectively than the case of the occupant protection device 100. It is also possible to reduce the cost of the device.

### (Another embodiment)

For example, the following respective embodiments based on the aforementioned embodiments may be carried out.

Though the aforementioned embodiments have been described with regard to a case where the three reference planes S 1 through S3 are set by the occupant protection device 100 and a case where the three reference planes T1 through T3 are set by the occupant protection device 200, at least one reference plane is set by each occupant protection device 100 in the present invention.

Though the aforementioned embodiments have been described with regard to the occupant protection device 100 and the occupant protection device 200 to be installed for protecting the vehicle occupant in the driver seat, the present invention can be adopted to an occupant protection device for protecting a vehicle occupant in a passenger seat or a rear seat. In this case, the camera as the photographing means is properly installed to a vehicle part such as an instrument panel which is located at a front side of the vehicle, a pillar, a door, a windshield, and a seat, if necessary.

Though the aforementioned embodiments have been described with regard to a case of deriving the volume V of the vehicle occupant C and the body size of the vehicle occupant C, the present invention can employ such a structure for deriving information about various objects (for example, a child seat) placed on the vehicle seat, in addition to the vehicle occupant, such as the configuration (volume and body size) and the posture of the object.

Though the aforementioned embodiments have been described with regard to a case where the detected information about the vehicle occupant C is used for control of the airbag module 160, the detected information about the object can be used for various controls regarding to the vehicle, in addition to occupant protection means which operates for protecting the vehicle occupant in the present invention.

Though the aforementioned embodiments have been described with regard to the structure of the occupant protection device to be installed in an automobile, the present invention can be adopted to various vehicles other than automobile such as an airplane, a boat, and a train.

## Claims

1. A detection system for detecting information about an object (C) seated in a vehicle seat (12), said detection system (110, 120) comprising:
a three-dimensional surface profile detecting means (112) for detecting a three-dimensional surface profile of said object (C) seated relating to a single view point;
a digitizing means (130) for digitizing the three-dimensional surface profile detected by said three-dimensional surface profile detecting means (112) into digital coordinates;
a seat-information detecting means (142-144) for detecting information about the seat condition of said vehicle seat (12);
a reference plane setting means (145) for setting a reference plane (S1; S2; S3; T1; T2; T3) for defining a profile invisible from the single view point among the respective parts of said three-dimensional surface profile based on said information about the seat condition of said vehicle seat (12) detected by said seat-information detecting means (142-144); and
a deriving means (146; 147) for correcting the digitized coordinates, which were digitized by said digitizing means (130), by the reference plane (S1; S2; S3; T1; T2; T3), which was set by said reference plane setting means (145), and deriving the information about said object (C) seated from the digitized coordinates thus corrected.

2. A detection system as claimed in claim 1, wherein
said reference plane setting means (145) sets at least one of three reference planes (S1-S3) as said reference plane based on said information about the seat condition of said vehicle seat (12), wherein said three reference planes are a first reference plane (S1) along a side surface of a seat cushion (12a) of said vehicle seat (12), a second reference plane (S2) along a surface of a seat back (12b) of said vehicle seat (12), and a third reference plane (S3) along a surface of the seat cushion (12c) of said vehicle seat (12).

3. A detection system as claimed in claim 1 or 2, further comprising a body-part-information detecting means (148-153) for detecting information about body parts of a vehicle occupant (C) as said object seated, including the positions and width of the head, the neck, the shoulder, the lumbar, and the back of the vehicle occupant, wherein
said reference plane setting means (145) corrects said reference plane (T1; T2; T3) according to the information about the body parts detected by said body-part-information detecting means (148-153).

4. A detection system as claimed in any one of claims 1 through 3, wherein
said reference plane setting means (145) sets said reference plane (T1; T2; T3) which is curved along the three-dimensional surface profile of said object (C) seated.

5. An occupant protection device comprising:
a detection system (110, 120) as claimed in any one of claims 1 through 4;
an occupant protection means (160) for protecting a vehicle occupant (C); and
a control means (120) for controlling the operation of said occupant protection means (160) according to the information about the body size of a vehicle occupant (C) as said object seated which was derived by the deriving means (146, 147) of said detection system (110, 120).

6. An occupant protection device as claimed in claim 5, wherein
said occupant protection means (160) comprising an airbag (164), which is inflated and deployed into an occupant protective area in the event of a vehicle collision, and an inflator (162) for supplying gas for inflating and deploying said airbag (164), and
said control means (120) controls the gas supply mode of said inflator (162) into said airbag (164) according to the information about the body size of said vehicle occupant (C).

7. A vehicle comprising an occupant protection device (100; 200) as claimed in claim 5 or 6.

8. A vehicle comprising: a running system including an engine, an electrical system, a drive control means for conducting the drive control of said running system and said electrical system, a vehicle seat (12), a camera (112) which is focused on an object (C) on said vehicle seat (12), and a processing means for processing information from the camera (112) by said drive control means, wherein
said processing means comprises a detection system (110, 120) as claimed in any one of claims 1 through 4.

9. A detection method for detecting information about an object (C) seated in a vehicle seat (12), said detection method comprising:
a first step for detecting a three-dimensional surface profile of said object (C) seated relating to a single view point;
a second step for digitizing said three-dimensional surface profile detected in said first step into digital coordinates;
a third step for detecting information about the seat condition of said vehicle seat (12);
a fourth step for setting a reference plane (S1; S2; S3; T1; T2; T3) for defining a profile invisible from the single view point among the respective parts of said three-dimensional surface profile based on said information about the seat condition of said vehicle seat (12) detected in said third step; and
a fifth step for correcting the digitized coordinates, which were digitized in said second step, by the reference plane (S1; S2; S3; T1; T2; T3), which was set in said fourth step, and deriving the information about said object (C) seated from the digitized coordinates thus corrected.

10. A detection method as claimed in claim 9, wherein
said fourth step sets at least one of three reference planes (S1-S3) as said reference plane based on said information about the seat condition of said vehicle seat, wherein said three reference planes are a first reference plane (S1) along a side surface of a seat cushion (12a) of said vehicle seat (12), a second reference plane (S2) along a surface of a seat back (126) of said vehicle seat (12), and a third reference plane (S3) along a surface of the seat cushion (12c) of said vehicle seat (12).

11. A detection method as claimed in claim 9 or 10, further comprising a body-part-information detecting step for detecting information about body parts of a vehicle occupant (C) as said object seated, including the positions and width of the head, the neck, the shoulder, the lumbar, and the back of the vehicle occupant (C), wherein
said fourth step corrects said reference plane (T1; T2; T3) according to the information about the body parts detected by said body-part-information detecting step.

12. A detection method as claimed in any one of claims 9 through 11, wherein
said fourth step sets said reference plane (T1; T2; T3) which is curved along the three-dimensional surface profile of said object (C) seated.

## Patentansprüche

1. Erfassungssystem zum Erfassen einer Information über ein Objekt (C), welches in einem Fahrzeugsitz (12) sitzt, wobei das Erfassungssystem (110, 120) umfasst:
Mittel (112) zur Erfassung eines dreidimensionalen Oberflächenprofils, um bezüglich eines einzigen Blickpunkts ein dreidimensionales Oberflächenprofil des sitzenden Objektes (C) zu erfassen;
Digitalisierungsmittel (130), um das dreidimensionale Oberflächenprofil, welches von den Mitteln (112) zur Erfassung eines dreidimensionalen Oberflächenprofils erfasst wird, in digitale Koordinaten zu digitalisieren;
Sitzinformationserfassungsmittel (142-144), um eine Information über den Sitzzustand des Fahrzeugsitzes (12) zu erfassen;
Referenzebenenvorgabemittel (145), um eine Referenzebene (S1; S2; S3; T1; T2; T3) vorzugeben, um inmitten der entsprechenden Teile des dreidimensionalen Oberflächenprofils basierend auf der Information über den Sitzzustand des Fahrzeugsitzes (12), welcher durch die Sitzinformationserfassungsmittel (142-144) erfasst wird, ein von dem Blickpunkt unsichtbares Profil zu definieren; und
Ableitungsmittel (146; 147), um die digitalisierten Koordinaten welche durch die Digitalisierungsmittel (130) digitalisiert wurden, durch die Referenzebene (S1; S2; S3; T1; T2; T3), welche durch die Referenzebenenvorgabemittel (145) vorgegeben wurde, zu korrigieren, und um die Information über das sitzende Objekt (C) von den derart korrigierten digitalisierten Koordinaten abzuleiten.

2. Erfassungssystem nach Anspruch 1, wobei
die Referenzebenenvorgabemittel (145) mindestens eine von drei Referenzebenen (S1-S3) als die Referenzebene basierend auf der Information über den Sitzzustand des Fahrzeugsitzes (12) vorgeben, wobei die drei Referenzebenen einer ersten Referenzebene (S1) entlang einer Seitenoberfläche eines Sitzpolsters (12a) des Fahrzeugsitzes (12), einer zweiten Referenzebene (S2) entlang einer Oberfläche einer Sitzrückenlehne (12b) des Fahrzeugsitzes (12) und einer dritten Referenzebene (S3) entlang einer Oberfläche des Sitzpolsters (12c) des Fahrzeugsitzes (12) entsprechen.

3. Erfassungssystem nach Anspruch 1 oder 2, darüber hinaus Körperteilinformationserfassungsmittel (148-153) umfassend, um eine Information über Körperteile eines Fahrzeuginsassen (C) als dem sitzenden Objekt zu erfassen, wobei die Stellungen und die Breite des Kopfes, des Nackens, der Schulter, der Hüfte und des Rückens des Fahrzeuginsassen eingeschlossen sind, wobei
die Referenzebenenvorgabemittel (145) die Referenzebene (T1; T2; T3) entsprechend der Information über die Körperteile, welche durch die Körperteilinformationserfassungsmittel (148-153) erfasst wird, korrigieren.

4. Erfassungssystem nach einem der Ansprüche 1 bis 3, wobei die Referenzebenenvorgabemittel (145) die Referenzebene (T1; T2; T3) vorgeben, welche entlang des dreidimensionalen Oberflächenprofils des sitzenden Objektes (C) gekrümmt ist.

5. Insassenschutzvorrichtung umfassend:
ein Erfassungssystem (110, 120) nach einem der Ansprüche 1 bis 4;
Insassenschutzmittel (160), um einen Fahrzeuginsassen (C) zu schützen; und
Steuermittel (120), um den Betrieb der Insassenschutzmittel (160) entsprechend der Information über die Körpergröße eines Fahrzeuginsassen (C) als dem sitzenden Objekt, welche durch die Ableitungsmittel (146, 147) des Erfassungssystems (110, 120) abgeleitet wurde, zu steuern.

6. Insassenschutzvorrichtung nach Anspruch 5, wobei
die Insassenschutzmittel (160) einen Airbag (164), welcher bei einer Fahrzeugkollision in einen Insassenschutzbereich aufgeblasen und entfaltet wird, und eine Aufblasvorrichtung (162), um Gas zuzuführen, um den Airbag (164) aufzublasen und zu entfalten, umfassen, und
wobei die Steuermittel (120) die Betriebsart der Aufblasvorrichtung (162) für eine Gaszufuhr in den Airbag (164) entsprechend der Information über die Körpergrö-ße des Fahrzeuginsassen (C) steuern.

7. Fahrzeug umfassend eine Insassenschutzvorrichtung (100; 200) nach Anspruch 5 oder 6.

8. Fahrzeug umfassend: ein Betriebssystem einschließlich eines Motors, eines elektrischen Systems, Antriebssteuermitteln, um die Antriebssteuerung des Betriebssystems und des elektrischen Systems durchzuführen, eines Fahrzeugsitzes (12), einer Kamera (112), welche auf ein Objekt (C) auf dem Fahrzeugsitz (12) fokussiert ist, und Verarbeitungsmitteln, um eine Information von der Kamera (112) durch die Antriebssteuermittel zu verarbeiten, wobei
die Verarbeitungsmittel ein Erfassungssystem (110, 120) nach einem der Ansprüche 1 bis 4 umfassen.

9. Erfassungsverfahren, um eine Information über ein Objekt (C), welches in einem Fahrzeugsitz (12) sitzt, zu erfassen, wobei das Erfassungsverfahren umfasst:
einen ersten Schritt, um ein dreidimensionales Oberflächenprofil des sitzenden Objektes (C) bezüglich eines einzigen Blickpunkts zu erfassen;
einen zweiten Schritt, um das dreidimensionale Oberflächenprofil, welches in dem ersten Schritt erfasst wird, in digitale Koordinaten zu digitalisieren;
einen dritten Schritt, um eine Information über den Sitzzustand des Fahrzeugsitzes (12) zu erfassen;
einen vierten Schritt, um eine Referenzebene (S1; S2; S3; T1; T2; T3) vorzugeben, um ein Profil inmitten der entsprechenden Teile des dreidimensionalen Oberflächenprofils basierend auf der Information über den Zustand des Fahrzeugsitzes (12), welche in dem dritten Schritt erfasst wird, unsichtbar von dem einzigen Blickpunkt zu definieren; und
einen fünften Schritt, um die digitalisierten Koordinaten, welche in dem zweiten Schritt digitalisiert wurden, durch die Referenzebene (S1; S2; S3; T1; T2; T3), welche in dem vierten Schritt vorgegeben wurde, zu korrigieren und um die Information über das sitzende Objekt (C) von den so korrigierten digitalen Koordinaten abzuleiten.

10. Erfassungsverfahren nach Anspruch 9, wobei
der vierte Schritt mindestens eine von drei Referenzebenen (S1-S3) als die Referenzebene basierend auf der Information über den Sitzzustand des Fahrzeugsitzes vorgibt, wobei die drei Referenzebenen einer ersten Referenzebene (S1) entlang einer Seitenoberfläche eines Sitzpolsters (12a) des Fahrzeugsitzes (12), einer zweiten Referenzebene (S2) entlang einer Oberfläche einer Sitzrückenlehne (126) des Fahrzeugsitzes (12) und einer dritten Referenzebene (53) entlang einer Oberfläche des Sitzpolsters (12c) des Fahrzeugsitzes (12) entsprechen.

11. Erfassungsverfahren nach Anspruch 9 oder 10, darüber hinaus umfassend einen Körperteilinformationserfassungsschritt, um eine Information über Körperteile eines Fahrzeuginsassen (C) als das sitzende Objekt zu erfassen, welche die Stellungen und die Breite des Kopfes, des Nackens, der Schulter, der Hüfte und des Rückens des Fahrzeuginsassen (C) umfasst, wobei
der vierte Schritt die Referenzebene (T1; T2; T3) entsprechend der Information über die Körperteile, welche durch den Körperteilinformationserfassungsschritt erfasst wird, korrigiert.

12. Erfassungsverfahren nach einem der Ansprüche 9 bis 11, wobei
der vierte Schritt die Referenzebene (T1; T2; T3) vorgibt, welche entlang dem dreidimensionalen Oberflächenprofil des sitzenden Objektes (C) gekrümmt wird.

## Revendications

1. Un système de détection pour détecter une information concernant un objet (C) assis dans un siège de véhicule (12), ledit système de détection (110, 120) comprenant :
des moyens de détection de profil de surface tridimensionnelle (112) pour détecter un profil de surface tridimensionnelle dudit objet (C) assis, par rapport à un point d'observation unique ;
des moyens de numérisation (130) pour numériser le profil de surface tridimensionnelle détecté par lesdits moyens de détection de profil de surface tridimensionnelle (112) en des coordonnées numériques;
des moyens de détection d'information de siège (142 à 144) pour détecter une information concernant l'état du siège, dudit siège de véhicule (12) ;
des moyens de fixation de plan de référence (145) pour fixer un plan de référence (S1 ; S2 ; S3 ; T1 ; T2 ; T3) pour définir un profil invisible depuis le point d'observation unique parmi les parties respectives dudit profil de surface tridimensionnelle d'après ladite information concernant l'état du siège dudit siège de véhicule (12) détecté par lesdits moyens de détection d'information de siège (142 à 144); et
des moyens de dérivation (146 ; 147) pour corriger les coordonnées numérisées, qui ont été numérisées par lesdits moyens de numérisation (130), par le plan de référence (S1 ; S2 ; S3 ; T1 ; T2 ; T3) qui avait été fixé par lesdits moyens de fixation de plan de référence (145), et pour dériver de l'information concernant ledit objet (C) assis, à partir des coordonnées numérisées ainsi corrigées.

2. Un système de détection tel que revendiqué à la revendication 1, dans lequel :
lesdits moyens de fixation de plan de référence (145) fixent au moins trois plans de référence (S1 à S3), en tant que dit plan de référence, en se basant sur ladite information au sujet de l'état dudit siège de véhicule (12), lesdits trois plans de référence étant un premier plan de référence (S1) le long d'une surface latérale d'un coussin de siège (12a) dudit siège de véhicule (12), un deuxième plan de référence (S2) le long d'une surface de dossier de siège (12b) dudit siège de véhicule (12), et un troisième plan de référence (S3) le long d'une surface du coussin de siège (12c) dudit siège de véhicule (12).

3. Un système de détection tel que revendiqué dans la revendication 1 ou 2, comprenant en outre, des moyens de détection d'information de parties corporelles (148 à 153) pour détecter une information au sujet de parties corporelles d'un occupant de véhicule (C) en tant que dit objet assis, incluant les positions et la largeur de la tête, du cou, de l'épaule, de la partie lombaire, et du dos de l'occupant du véhicule, dans lequel :
lesdits moyens de fixation plan de référence (145) corrigent ledit plan de référence (T1; T2 ; T3) selon l'information concernant les parties corporelles, détectée par lesdits moyens de détection d'information de partie corporelle (148 à 153).

4. Un système de détection tel que revendiqué dans l'une quelconque des revendications 1 à 3, dans lequel :
lesdits moyens de fixation de plan de référence (145) fixent ledit plan de référence (T1; T2 ; T3) qui est incurvé le long du profil de surface tridimensionnelle dudit objet (C) assis.

5. Un dispositif de protection d'un occupant, comprenant:
un système de détection (110, 120), tel que revendiqué dans l'une quelconque des revendications 1 à 4 ;
des moyens de protection d'occupant (160), pour protéger un occupant de véhicule (C) ; et
des moyens de commande (120) pour commander le fonctionnement desdits moyens de protection d'occupant (160) selon l'information au sujet de la taille du corps d'un occupant de véhicule (C) en tant que dit objet assis, qui avait été dérivée par les moyens de dérivation (146, 147) dudit système de détection (110, 120).

6. Un dispositif de protection d'un occupant tel que revendiqué dans la revendication 5, dans lequel :
lesdits moyens de protection d'un occupant (160) comprennent un sac gonflable de sécurité (164), gonflé et déployé dans une zone de protection d'un occupant dans l'éventualité d'une collision du véhicule, et un gonfleur (162), pour fournir du gaz servant à gonfler et à déployer ledit sac gonflable de sécurité (164), et
lesdits moyens de commande (120) commandent le mode d'alimentation en gaz dudit gonfleur (162) dans ledit sac gonflable de sécurité (164) selon une information concernant la taille corporelle dudit occupant de véhicule (C).

7. Un véhicule comprenant un dispositif de protection d'un occupant (100 ; 200), tel que revendiqué dans la revendication 5 ou 6.

8. Un véhicule comprenant : un système de propulsion, comprenant un moteur, un système électrique, des moyens de commande d'entraînement pour conduire la commande d'entraînement dudit système de propulsion et ledit système électrique, un siège de véhicule (12), une caméra (112) focalisée sur un objet (C) dudit siège de véhicule (12), et des moyens de traitement pour traiter une information venant de la caméra (1 12) par lesdits moyens de commande d'entraînement, dans lequel :
lesdits moyens de traitement comprennent un système de détection (110, 120), tel que revendiqué dans l'une quelconque des revendications 1 à 4.

9. Un procédé de détection pour détecter une information concernant un objet (C) assis dans un siège de véhicule (12), ledit procédé de détection comprenant :
une première étape de détection d'un profil de surface tridimensionnelle dudit objet (C) assis, par rapport à un point d'observation unique ;
une deuxième étape de numérisation dudit profil de surface tridimensionnelle, détecté dans ladite première étape, en des coordonnées numériques ;
une troisième étape de détection d'information concernant l'état du siège, dudit siège de véhicule (12) ;
une quatrième étape pour fixer un plan de référence (S1 ; S2 ; S3 ; T1 ; T2 ; T3), pour définir un profil invisible depuis le point d'observation unique parmi les parties respectives dudit profil de surface tridimensionnelle d'après ladite information concernant l'état du siège, dudit siège de véhicule (12), détectée dans ladite troisième étape ; et
une cinquième étape pour corriger les coordonnées numérisées, qui ont été numérisées à ladite deuxième étape, par le plan de référence (S1 ; S2 ; S3 ; T1; T2 ; T3), qui avait été fixé à ladite quatrième étape, et pour dériver de l'information concernant ledit objet (C) assis, à partir des coordonnées numérisées ainsi corrigées.

10. Un procédé de détection tel que revendiqué dans la revendication 9, dans lequel :
ladite quatrième étape fixe au moins l'un de trois plans de référence (S1 à S3) comme étant ledit plan de référence d'après ladite information concernant l'état du siège dudit siège de véhicule, dans lequel lesdits trois plans de référence sont un premier plan de référence(SI) le long d'une surface latérale d'un coussin de siège (12a) dudit siège de véhicule (12), un deuxième plan de référence (S2) le long d'une surface d'un dossier de siège (126) dudit siège de véhicule (12), et un troisième plan de référence (S3) le long d'une surface dudit coussin de siège (12c) dudit siège de véhicule (12).

11. Un procédé de détection tel que revendiqué dans la revendication 9 ou 10, comprenant en outre une étape de détection d'information de parties corporelles, pour détecter une information concernant des parties corporelles d'un objet pour un occupant de véhicule (C) en tant que dit objet assis, incluant les positions et la largeur de la tête, du cou, de l'épaule, de la partie lombaire, et du dos de l'occupant de véhicule (C), dans lequel:
ladite quatrième étape corrige ledit plan de référence (T1; T2 ; T3) selon l'information concernant les parties corporelles détectée par ladite étape de détection d'information de partie corporelle.

12. Un procédé de détection tel que revendiqué dans l'une quelconque des revendications 9 à 11, dans lequel
ladite quatrième étape fixe ledit plan de référence (T1 ; T2 ; T3) qui est incurvé le long du profil de surface tridimensionnelle dudit objet (C) assis.
